Europäisches Patentamt

European Patent Office

Office européen des brevets

(11) Veröffentlichungsnummer: **0 359 154**
**A2**

(12) **EUROPÄISCHE PATENTANMELDUNG**

(21) Anmeldenummer: **89116702.5**

(22) Anmeldetag: **09.09.89**

(51) Int. Cl.5 **G11B 5/85**

(30) Priorität: **16.09.88 DE 3831484**

(43) Veröffentlichungstag der Anmeldung:
**21.03.90 Patentblatt 90/12**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Werner, Arend, Dr.**
**Kurbrunnenstrasse 26**
**D-6702 Bad Duerkheim(DE)**
Erfinder: **Hibst, Hartmut, Dr.**
**Sternstrasse 215**
**D-6700 Ludwigshafen(DE)**
Erfinder: **Haedicke, Erich, Dr.**
**Pferchweg 2b**
**D-6945 Hirschberg(DE)**

(54) **Verfahren zur Herstellung von magnetischen Aufzeichnungsträger für die Vertikalaufzeichnung.**

(57) Die Erfindung betrifft ein Verfahren zur Herstellung von magnetischen Aufzeichnungsträgern für die Vertikalaufzeichnung durch Beschichten eines unmagnetischen Substrats mittels eines PVD-Verfahrens mit einer kobalthaltigen, ferromagnetischen Metallschicht, welche eine zur Schichtebene senkrechte magnetische Anisotropie aufweist, wobei während der Beschichtung die Temperatur des Substrats durch Fremdheizung erhöht wird.

EP 0 359 154 A2

## Verfahren zur Herstellung von magnetischen Aufzeichnungsträgern für die Vertikalaufzeichnung

Die Erfindung betrifft ein Verfahren zur Herstellung von magnetischen Aufzeichnungsträgern für die Vertikalaufzeichnung durch Beschichten eines unmagnetischen Substrats mittels eines PVD-Verfahrens mit einer kobalthaltigen, ferromagnetischen Metallschicht, welche eine zur Schichtebene senkrechte magnetische Anisotropie aufweist.

Die zur Zeit üblicherweise eingesetzten magnetischen Aufzeichnungsträger bestehen aus einem unmagnetischen Trägermaterial und einer darauf aufgebrachten Magnetschicht, welche sich im wesentlichen aus feinteiligem magnetischem Material in einer organischen Bindemittelmatrix zusammensetzt. Hierbei wird auf das band- oder scheibenförmige Trägermaterial, das sowohl flexibel als auch starr sein kann, eine Dispersion des magnetischen Materials in der Lösung des organischen Bindemittels, durch Aufschleudern oder durch Rakeln aufgebracht und physikalisch und/oder chemisch verfestigt. Da jedoch die weitere Entwicklung der elektronischen Informationsverarbeitung zunehmend eine steigende Speicherdichte erfordert, ergeben sich für die magnetischen Aufzeichnungsträger mit einer Pigment/Bindemittel-Magnetschicht zunehmend Probleme.

Kohärente dünne Schichten aus magnetischem Material, vorzugsweise Metallegierungen, bieten sich aufgrund ihrer physikalischen Eigenschaften als Speichermedium mit deutlich erhöhter Speicherdichte an. Hier wird zwischen der Longitudinalaufzeichnung, bei der die Magnetisierung der Schicht in der Schichtebene erfolgt, und der Vertikalaufzeichnung, bei der die Magnetisierung senkrecht zur Schicht erfolgt, unterschieden. Erstere Methode hat bei zunehmender Speicherdichte den Nachteil anwachsender Entmagnetisierung, wodurch die Aufzeichnungsdichte limitiert ist. Bei der Vertikalaufzeichnung hingegen nimmt die Entmagnetisierung in vorteilhafter Weise mit steigender Speicherdichte ab und erlaubt daher höhere Aufzeichnungsdichten als bei der herkömmlichen Longitudinalaufzeichnung.

Die für die Vertikalaufzeichnung geeigneten magnetischen Aufzeichnungsmedien müssen eine Magnetschicht aufweisen, deren magnetische Vorzugsrichtung (magnetisch leichte Achse) senkrecht zur Schichtebene verläuft. Als besonders günstiges Material für derartige Magnetschichten haben sich (Co-Cr)-Legierungen mit Cr-Gehalten von 15 bis 30 At.-% herausgestellt (DE-A 2 842 609, US-A 4 210 946). Neben Cr werden aber auch andere Legierungspartner wie V, W, Mo, Ti, Ru, Rh, Pd eingesetzt bzw. werden dreikomponentige Legierungen des Types Co-Cr-M mit M = Ta, Rh, Pd u.a. mit Erfolg verwendet (J. Howard, "Thin films for magnetic recording technology: A review", J. Vac. Sci. Technol. A 4 (1986) 1 - 12). Allen diesen Materialien ist gemein, daß sie im hexagonalen Kristallgitter vorliegen und die magnetisch leichte Achse parallel zur c-Achse des Kristallgitters verläuft. Hieraus ergibt sich für die Anwendung dieser Legierungen als dünne Schichten für die Vertikalaufzeichnung die Forderung, daß die c-Achsen der die Schicht bildenden Kristallite möglichst alle senkrecht zur Schichtebene ausgerichtet sein müssen. Eine weitere Forderung betrifft die Koerzitivfeldstärke senkrecht zur Schichtebene ($H_c$(perpen)), wobei $H_c$(perpen) möglichst hoch sein sollte.

Als Methoden für die Herstellung derartiger dünner (Co-Cr)-Schichten haben sich die PVD-Verfahren, Sputtern und Hochvakuumverdampfen, bewährt (US-A 4 210 946, US-A 4 429 016). Die aufgrund hoher Raten für die industrielle Produktion in Frage kommenden Methoden sind das Aufdampfen (bevorzugt für Folienbeschichtung) bzw. das Magnetron-Sputtern mit unterschiedlichen Ausführungsformen, wie z.B. mit Planar-Magnetron- oder Facing-Target-Anordnung (für feste Substrate und Folien), während Sputtern im RF-Dioden-Mode aufgrund der niedrigen Rate nur beschränkt einsetzbar ist.

Bei der Herstellung der (Co-Cr)-Schichten für die Vertikalaufzeichnung hat sich gezeigt, daß die Güte der kristallographischen und magnetischen Senkrechtausrichtung ganz wesentlich durch die Art des verwendeten Substrates und durch zuvor auf das Substrat aufgebrachte Zwischenschichten (Ti, Si, Ge, u.a.) beeinflußt wird (M. Fukamato, Y. Honda, H. Kakibayashi und K. Yoshida, "Microstructure and Magnetic Properties of Co-Cr Thin Films Formed on Ge-Layer", IEEE Transact. Magn. 21 (1985) 1426 - 1428). Durch die Wahl eines geeigneten Substrates bzw. eines Substrates, das durch eine geeignete Zwischenschicht modifiziert worden ist, lassen sich Schichten mit sehr guter Senkrechtausrichtung sowohl durch Sputtern als auch durch Aufdampfen herstellen.

Ferner ist bekannt, daß im RF-Dioden-Mode gesputterte (Co-Cr)-Schichten hohe $H_c$(perpen)-Werte und eine gute kristallographische Senkrechtausrichtung aufweisen (T. Wielinga und J. Lodder, "Co-Cr Films for Perpendicular Recording", IEEE Transact. Magn. 17, (1981), 3178-3180). Im Falle der beiden anderen Beschichtungsverfahren hingegen ist zusätzlich ein Aufheizen der Substrate erforderlich, um die geforderten hohen $H_c$(perpen)-Werte zu realisieren. Ohne Substratheizung liegt $H_c$(perpen) für $Co_{80}Cr_{20}$ typischerweise bei etwa 20 kA/m. Bei einer Substrattemperatur von ca. 250 °C steigt $H_c$(perpen) auf rund 150 kA/m an. In nachteiliger Weise bewirkt das Aufheizen der Substrate neben der gewünschten Erhöhung von $H_c$-(perpen) jedoch eine deutliche Verschlechterung der kristallographischen und magnetischen Senkrechtausrichtung der Schichten.

Es bestand daher die Aufgabe, ein Verfahren zur Herstellung magnetischer Aufzeichnungsträger, welche im wesentlichen aus einem Substrat einer oder mehrerer Zwischenschichten und einer Kobalt-haltigen ferromagnetischen Metallschicht mit Senkrechtanisotropie bestehen, derart auszugestalten, daß die im Magnetron-Mode gesputterten bzw. durch Hochvakuumverdampfung erzeugten Schichten sowohl hohe $H_c$(perpen)-Werte als auch eine ausgeprägte kristallographische und magnetische Senkrechtausrichtung aufweisen.

Es wurde nun gefunden, daß sich mit einem Verfahren zur Herstellung von für die Vertikalaufzeichnung geeigneter magnetischer Aufzeichnungsträger durch Beschichten eines unmagnetischen Substrats nach einem PVD-Verfahren mit einer kobalthaltigen, ferromagnetischen Metallschicht mit einer zur Schichtebene senkrechten magnetischen Anisotropie die Aufgabe lösen läßt, wenn zu Beginn der nach einem PVD-Verfahren durchgeführten Beschichtung des Substrats mit der kobalthaltigen, ferromagnetischen Metallschicht das Substrat eine Temperatur $T_{S1}$ aufweist, welche durch Fremdheizung des Substrats während der Beschichtung auf eine gegenüber $T_{S1}$ höhere Temperatur $T_{S2}$ gebracht wird.

Nach dem erfindungsgemäßen Verfahren wird das flexible bzw. starre Substrat in bekannter Weise gereinigt und gegebenenfalls mit einer oder mehreren Unterschichten versehen. Zu diesem Zeitpunkt, also vor Beginn der Beschichtung mit der Co-haltigen Magnetschicht, ist das Substrat kalt, d.h. $T_{S1}$ liegt deutlich unter der Temperatur, die zur Erreichung der hohen $H_c$(perpen)-Werte erforderlich ist, insbesondere bei einer Temperatur zwischen -50 bis +100°C, vorzugsweise bei Raumtemperatur. Bei dieser Substrattemperatur $T_{S1}$ wird mit der Abscheidung der Co-Legierung begonnen, und es wird eine Schicht aufgebracht mit einer Dicke $d_1$ von 1 bis 200 nm, vorzugsweise 5 bis 50 nm. Im nächsten Schritt wird das Substrat auf die zur Erreichung des gewünschten $H_c$-(perpen)-Wertes erforderliche Temperatur $T_{S2}$, welche vorzugsweise über 100 und bis zu 400°C beträgt, aufgeheizt. Nach Erreichen von $T_{S2}$ wird die Beschichtung fortgesetzt, bis die gewünschte Magnetschichtdicke $d_2$ erreicht ist, wobei $d_1 \ll d_2$ und $d_2/d_1 = 3$ bis 1 000, vorzugsweise 5 bis 20 ist. Bei einer vorteilhaften Ausgestaltung des erfindungsgemäßen Verfahrens wird die Beschichtung während des Übergangs von $T_{S1}$ nach $T_{S2}$ nicht unterbrochen. Der Übergang von $T_{S1}$ nach $T_{S2}$ kann dabei linear erfolgen, es sind aber auch beliebige andere Übergänge von $T_{S1}$ nach $T_{S2}$ möglich. Die für das Erreichen von $T_{S2}$ erforderliche Aufheizzeit muß so angelegt sein, daß die während $T_{S1}$ plus des Übergangs von $T_{S1}$ nach $T_{S2}$ erzeugte Schichtdicke $d_1$ deutlich kleiner ist als die Gesamtschichtdicke $d_2$. Vorzugsweise sollte dabei $d_2/d_1 = 2$ bis 20 betragen.

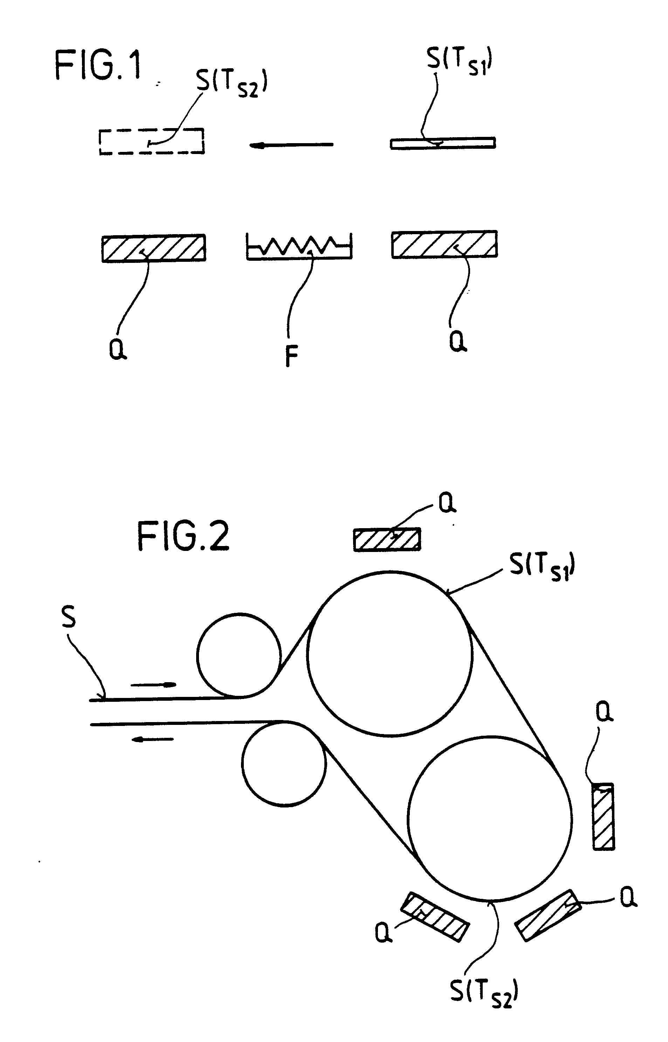

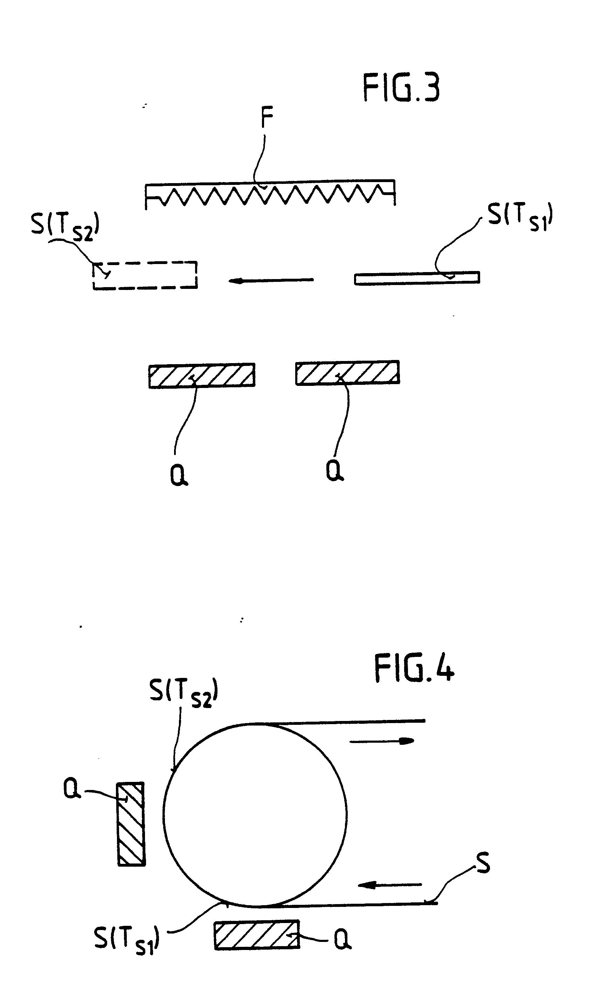

Schematische Darstellungen für das erfindungsgemäße Verfahren sind in den Figuren 1, 2, 3 und 4 wiedergegeben. Hierbei ist der Verlauf des starren oder flexiblen Substrats (S) unter Angabe der jeweiligen Temperatur (T) in Bezug auf die Beschichtungsquellen (Q) und die Fremdheizungen (F) angegeben.

Mit dem erfindungsgemäßen Verfahren lassen sich Aufzeichnungsträger für die magnetische Vertikalaufzeichnung durch PVD-Verfahren mit hoher Beschichtungsrate herstellen, die sich gegenüber dem Stand der Technik durch die gewünschte hohe Koerzitivfeldstärke $H_c$(perpen)und gleichzeitig durch die sehr gute kristallographische und magnetische Senkrechtausrichtung der Magnetschicht auszeichnen. Damit wird gegenüber dem Stand der Technik eine deutliche Verbesserung erzielt, da bei den bekannten Verfahrensweisen die Verbesserung einer Eigenschaft die Verschlechterung der anderen zur Folge hatte.

Die Erfindung sei anhand der folgenden Beispiele im Vergleich zu Versuchen nach den bekannten Vorgehensweisen näher erläutert. Die an den Magnetschichten gemessene Koerzitivfeldstärke $H_c$(perpen) in kA/m wurde mit einem Schwingmagnetometer bestimmt. Als Maß für die Güte der magnetischen Senkrechtausrichtung wird die relative Remanenz $m_r$(para) herangezogen, bestimmt aus der parallel zur Schichtebene gemessenen Hysteresekurve. Schichten mit sehr guter magnetischer Senkrechtausrichtung weisen sehr kleine $m_r$-(para)-Werte von typischerweise 0,10 auf. Als Maß für die Güte der kristallographischen Senkrechtausrichtung gilt die Halbwertsbreite $\Delta^\Theta 50$ der Rockingkurve des (002)-Reflexes. Für sehr gut orientierte (Co-Cr)-Schichten auf Glas liegt $\Delta^\Theta$ bei 3° und steigt auf mehr als 20° für schlecht orientierte Schichten an.

Vergleichsversuch 1

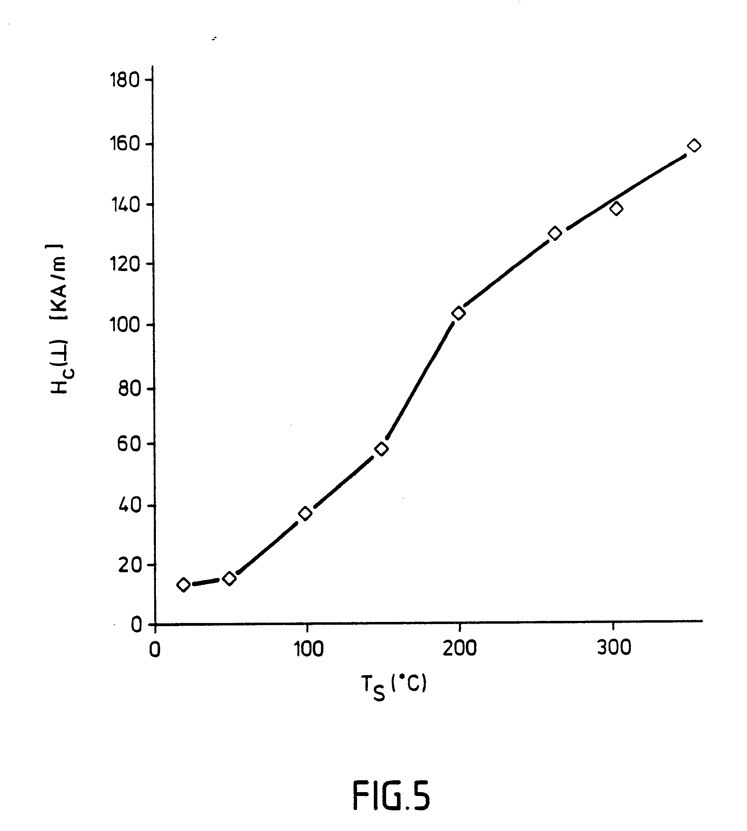

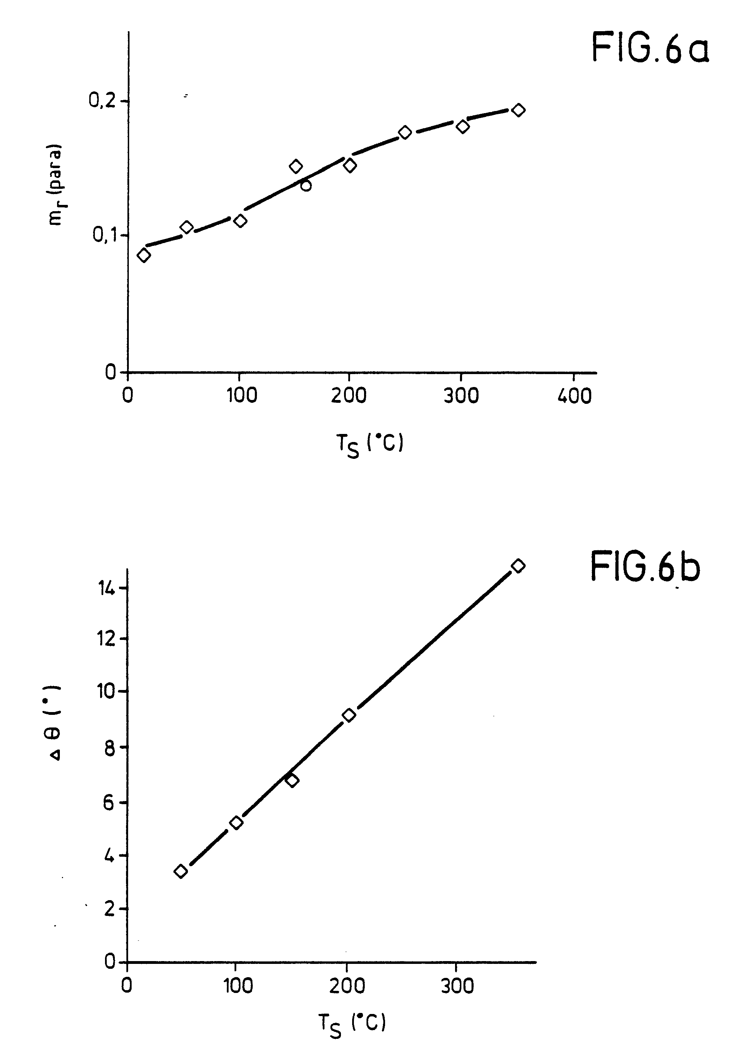

$Co_{79}Cr_{21}$-Schichten wurden auf durch RF-Sputterätzen gereinigte Glassubstrate im DC-Magnetron-Mode aufgesputtert. Die Abscheiderate betrug 200 nm/min und die Schichten hatten eine Dicke von 500 nm. Die vor Beginn der Beschichtung eingestellte Substrattemperatur $T_S$ lag zwischen Raumtemperatur und 350°C. Als Folge der anwachsenden Substrattemperatur erhöhte sich $H_c$-(perpen) von 15 kA/m (Raumtemperatur) auf 160 kA/m ($T_S$ = 350° C) (Figur 5). Diese gewünschte Erhöhung von $H_c$(perpen) hatte eine deutliche Verschlechterung der kristallographischen und magnetischen Senkrechtausrichtung zur Folge (Figur 6a und b). $\Delta\Theta$ wuchs von 3,5° auf 14,5° und $m_r$(para) verschlechtert sich von 0,09 auf 0,19.

Beispiel 1

Co$_{79}$Cr$_{21}$-Schichten wurden auf gereinigte Glassubstrate im DC-Magnetron-Mode aufgesputtert. Die Abscheiderate betrug 200 nm/min und die Schichten hatten eine Dicke von 500 nm. Dabei wurde die Substrattemperatur $T_S$ während der Abscheidung der ersten 100 nm durch Fremdheizung von 20° C auf 180° C erhöht und dann während der weiteren Beschichtung konstant gehalten. Die resultierenden Schichten hatten folgende Eigenschaften: $\Delta\Theta$ = 4°, $m_r$(para) = 0,12 und $H_c$-(perpen) = 80 kA/m.

Vergleichsversuch 2

Co$_{78}$Cr$_{22}$-Schichten wurden auf eine 50 μm dicke Polyimid-Folie mit einer Substrattemperatur von 20° C durch Simultanverdampfung von Co und Cr aufgebracht. Die Verdampfung erfolgte mittels zweier Elektronenstrahlverdampfer mit einer Rate von 120 nm/min für Co und 36 nm/min für Cr. Die erhaltenen 300 nm dicken Schichten weisen eine niedrige $H_c$(perpen) von 26 kA/m auf. Die kristallographische und magnetische Senkrechtausrichtung beträgt $\Delta\Theta$ = 11° und $m_r$(para) = 0,16.

Vergleichsversuch 3

Co$_{78}$Cr$_{22}$-Schichten wurden wie in Vergleichsversuch 2 beschrieben hergestellt. Die Polyimid-Folie wurde durch Fremdheizung vor Beginn der Beschichtung auf 150° C aufgeheizt, um die gewünschte Erhöhung von $H_c$(perpen) zu erzielen. Als Folge davon stieg zwar $H_c$(perpen) auf 54 kA/m, jedoch wurde die Senkrechtausrichtung deutlich verschlechtert: $\Delta\Theta$ = 20°, $m_r$(para) = 0,29.

Beispiel 2

Co$_{78}$Cr$_{22}$-Schichten wurden wie in Vergleichsversuch 2 beschrieben aufgedampft. Hierbei wurde die Folie nach Abscheiden einer 10 nm dicken Co$_{78}$Cr$_{22}$-Schicht sehr schnell, innerhalb von 1 Minute, auf 150° C aufgeheizt und danach weitere 290 nm abgeschieden. Diese Schichten hatten eine $H_c$(perpen) von 50 kA/m und mit $\Delta\Theta$ = 130 und

$m_r$(para) = 0,18 eine deutlich bessere Senkrechtorientierung als die konventionell hergestellten Schichten gemäß Vergleichsversuch 3.

## Ansprüche

1. Verfahren zur Herstellung von magnetischen Aufzeichnungsträgern für die Vertikalaufzeichnung durch Beschichten eines unmagnetischen Substrats nach einem PVD-Verfahren mit einer kobalthaltigen, ferromagnetischen Metallschicht mit einer zur Schichtebene senkrechten magnetischen Anisotropie, dadurch gekennzeichnet, daß zu Beginn der nach einem PVD-Verfahren durchgeführten Beschichtung des Substrats mit der kobalthaltigen, ferromagnetischen Metallschicht das Substrat eine Temperatur $T_{S1}$ aufweist, welche durch Fremdheizung des Substrats während der Beschichtung auf eine gegenüber $T_{S1}$ höhere Temperatur $T_{S2}$ gebracht wird.

2. Verfahren zur Herstellung von magnetischen Aufzeichnungsträgern für die Vertikalaufzeichnung durch Beschichten eines unmagnetischen Substrats nach einem PVD-Verfahren mit einer kobalthaltigen, ferromagnetischen Metallschicht mit einer zur Schichtebene senkrechten magnetischen Anisotropie, dadurch gekennzeichnet, daß zu Beginn der nach einem PVD-Verfahren durchgeführten Beschichtung des Substrats mit der kobalthaltigen, ferromagnetischen Metallschicht das Substrat eine Temperatur $T_{S1}$ aufweist und durch Fremdheizung auf eine gegenüber $T_{S1}$ höhere Temperatur $T_{S2}$ gebracht wird, bei der die Beschichtung fortgesetzt wird.

3. Verfahren nach Anspruch 1 oder 2, dadurch gekennzeichnet, daß die Temperatur $T_{S1}$ -50 bis +100° C und die Temperatur $T_{S2}$ über 100 und bis zu 400° C beträgt.

4. Verfahren gemäß Anspruch 1, dadurch gekennzeichnet, daß bei der Beschichtung des Substrats mit der kobalthaltigen, ferromagnetischen Metallschicht die Dicke $d_1$ dieser Schicht vor Erreichen der Temperatur $T_{S2}$ 1 bis 200 nm und das Verhältnis der Gesamtdicke $d_2$ zur Dicke $d_1$ dieser Schicht 3 bis 1 000 beträgt.

5. Verfahren gemäß Anspruch 2, dadurch gekennzeichnet, daß die Beschichtung des Substrats mit der kobalthaltigen, ferromagnetischen Metallschicht während des Aufheizens des Substrats von der Temperatur $T_{S1}$ auf die Temperatur $T_{S2}$ fortgesetzt wird und das Verhältnis der Gesamtdicke $d_2$ der Schicht zu der bis zum Erreichen der Temperatur $T_{S2}$ abgeschiedenen Dicke der Metallschicht $d_1$ 2 bis 20 beträgt.

FIG.1

$S(T_{S2})$

$S(T_{S1})$

Q

F

Q

FIG.2

Q

$S(T_{S1})$

S

Q

Q

Q

$S(T_{S2})$

228/88

# FIG.3

F

$S(T_{S2})$

$S(T_{S1})$

Q

Q

# FIG.4

$S(T_{S2})$

Q

S

$S(T_{S1})$

Q

228/88

FIG.5

FIG.6a

FIG.6b

228/88